(19) Europäisches Patentamt
European Patent Office
Office européen des brevets

(11) Veröffentlichungsnummer: **0 317 859 B1**

(12) **EUROPÄISCHE PATENTSCHRIFT**

(45) Veröffentlichungstag der Patentschrift: **27.11.91**

(51) Int. Cl.5: **C09B 69/10**, D06P 1/02, C09D 11/02

(21) Anmeldenummer: **88118925.2**

(22) Anmeldetag: **14.11.88**

# (54) Polyethylenimin enthaltende Azofarbstoffe.

(30) Priorität: **21.11.87 DE 3739456**

(43) Veröffentlichungstag der Anmeldung:
**31.05.89 Patentblatt 89/22**

(45) Bekanntmachung des Hinweises auf die Patenterteilung:
**27.11.91 Patentblatt 91/48**

(84) Benannte Vertragsstaaten:
**CH DE FR GB IT LI NL SE**

(56) Entgegenhaltungen:
**EP-A- 0 223 501**
**FR-A- 1 310 583**
**US-A- 4 182 612**

**PATENT ABSTRACTS OF JAPAN, Band 8, Nr. 114 (C-225)[1551], 26. Mai 1984; & JP-A-59 27 973 (DAINIPPON INK KAGAKU KOGYO K.K.) 14-02-1984**

(73) Patentinhaber: **BASF Aktiengesellschaft**
**Carl-Bosch-Strasse 38**
**W-6700 Ludwigshafen(DE)**

(72) Erfinder: **Mayer, Udo, Dr.**
**Max-Slevogt-Strasse 27**
**W-6710 Frankenthal(DE)**
Erfinder: **Raulfs, Friedrich-Wilhelm, Dr.**
**Torwiesenstrasse 1**
**W-6800 Mannheim 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die vorliegende Erfindung betrifft neue Polyethylenimin enthaltende Azofarbstoffe, deren Diazokomponente sich von einem isocyclischen aromatischen Amin oder einem heteroaromatischen Amin ableitet und frei ist von Hydroxysulfonylgruppen, und deren Kupplungskomponente aus der Hydroxynaphthalin-, Aminopyridin- oder Pyrazolonreihe stammt und höchstens eine Hydroxysulfonylgruppe aufweist, oder deren Kupplungskomponente sich von Acetessigsäure ableitet, wobei der Polyethyleniminrest, dessen Polymerisationsgrad n 5 bis 25 000 beträgt, über eine kovalente Bindung oder über ein Brückenglied an die Kupplungskomponente gebunden ist, und wobei das Verhältnis Chromophor zu Monomereinheit, abhängig vom Polymerisationsgrad n 1:1 bis 1:35 beträgt, aber für den Fall, daß die Kupplungskomponente durch Hydroxysulfonyl substituiert ist, 1:2 bis 1:35 ist, sowie die Verwendung dieser Farbstoffe zum Färben oder Bedrucken von Fasermaterialien oder zur Herstellung von Tinten für das Ink-Jet-Verfahren.

Azofarbstoffe, die eine Polyethylenimingruppierung aufweisen, sind z.B. aus der DE-A-2 018 855, DE-A-2 214 966, US-A-3 937 851, US-A-4 375 357 oder US-A-4 664 708 bekannt. Es hat sich jedoch gezeigt, daß die dort beschriebenen Farbstoffe anwendungstechnische Mängel aufweisen. Insbesondere besitzen sie eine ungenügende Löslichkeit in saurem Milieu.

Aufgabe der vorliegenden Erfindung war es nun, neue Polyethylenimin enthaltende Azofarbstoffe bereitzustellen, die die genannten Nachteile nicht mehr aufweisen.

Es wurden neue Polyethylenimin enthaltende Azofarbstoffe der Formel I

$$[(D\text{-}N=N\text{-}K\text{-})_yX\text{-}]_mP \quad (I)$$

gefunden, in der

- D den Rest einer Diazokomponente, die sich von einem isocyclischen aromatischen Amin oder von einem heteroaromatischen Amin ableitet und frei ist von Hydroxysulfonylgruppen,
- K den Rest einer Kupplungskomponente aus der Hydroxynaphthalin-, Aminopyridin- oder Pyrazolonreihe, der für den Fall, daß er durch Hydroxysulfonyl substituiert ist, höchstens eine Hydroxysulfonylgruppe aufweist, oder den Rest einer Kupplungskomponente, die sich von Acetessigsäure ableitet,
- y 1 oder 2,
- X für den Fall, daß y für 1 steht, eine kovalente Bindung oder ein zweiwertiges Brückenglied oder für den Fall, daß y für 2 steht, ein Brückenglied und
- P den Rest eines Polyethylenimins, dessen Polymerisationsgrad n 5 bis 25 000 beträgt,

bedeuten, wobei die Anzahl m der Chromophorreste abhängig ist vom Polymerisationsgrad n und durch das Verhältnis m:n = 1:1 bis 1:35 definiert ist, mit der Maßgabe, daß wenn der Rest K durch Hydroxysulfonyl substituiert ist, das Verhältnis m:n 1:2 bis 1:35 beträgt.

Amine der isocyclischen aromatischen Reihe sind z.B. Anilin oder dessen Derivate, Aminonaphthalin oder dessen Derivate oder Aminoanthrachinon oder dessen Derivate.

Amine der heteroaromatischen Reihe leiten sich z.B. von Pyrazol, Imidazol, Oxazol, Isoxazol, Thiazol, Isothiazol, Thiophen, Benzimidazol, Benzoxazol, Benzisoxazol, Benzthiazol, Benzisothiazol oder Benzothiophen ab.

Die als Diazokomponenten dienenden Amine können ein- oder mehrfach substituiert sein. Als Substituenten kommen z.B. $C_1$-$C_4$-Alkyl, Halogen, insbesondere Chlor oder Brom, Hydroxy, $C_1$-$C_4$-Alkoxy, $C_1$-$C_4$-Alkanoylamino, Nitro, Formyl, $C_1$-$C_4$-Alkoxycarbonyl, Carbamoyl, $C_1$-$C_4$-Mono- oder Dialkylcarbamoyl, Cyano, gegebenenfalls durch $C_1$-$C_4$-Alkyl, $C_1$-$C_4$-Alkoxy oder Halogen substituiertes Phenylazo oder gegebenenfalls durch $C_1$-$C_4$-Alkyl substituiertes Benzthiazol-2-yl in Betracht.

Einzelne Substituenten sind z.B. Methyl, Ethyl, Propyl, Isopropyl, Butyl, Isobutyl, sec-Butyl, Fluor, Chlor, Brom, Methoxy, Ethoxy, Propoxy, Isopropoxy, Butoxy, Isobutoxy, sec-Butoxy, Formylamino, Acetylamino, Propionylamino, Butyrylamino, Isobutyrylamino, Methoxycarbonyl, Ethoxycarbonyl, Propoxycarbonyl, Isopropoxycarbonyl, Butoxycarbonyl, Isobutoxycarbonyl, sec-Butoxycarbonyl, Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl, N-Methyl-N-ethylcarbamoyl, Phenylazo, 2-Methylphenylazo, 4-Methylphenylazo, 2-Methoxyphenylazo, 4-Methoxyphenylazo, 2-Chlorphenylazo, 4-Chlorphenylazo, Benzthiazol-2-yl oder 6-Methylbenzthiazol-2-yl.

Wenn der Rest der Diazokomponente D von einem Amin D-$NH_2$ der isocyclischen aromatischen Reihe stammt, leitet sich dieses vorzugsweise von Anilin, das gegebenenfalls ein- oder mehrfach substituiert ist, ab.

Beispielhaft seien folgende Diazokomponenten genannt: Anilin, 2-Methylanilin, 4-Chloranilin, 3,5-Dichloranilin, 2-Hydroxyanilin, 2-Methoxyanilin, 4-Methoxyanilin, 2,5-Dimethoxyanilin, 3-Acetylaminoanilin, 4-Acetylaminoanilin, 2-Methoxy-4-acetylaminoanilin, 3-Methoxy-4-acetylaminoanilin, 3-Nitroanilin, 2,5-Dinitroanilin, 3-Aminobenzaldehyd, Anthranilsäuremethylester, Anthranilsäurethylester, Anthranilsäureamid, 3-Aminobenzamid, 4-Aminobenzamid, 3-Amino-2-methoxybenzamid, 2-Dimethylcarbamoylanilin, 3-Dimethylcarbamoylanilin, 4-Dimethylcarbamoylanilin, 2-Cyanoanilin, 3-Cyanoanilin, 4-Cyanoanilin, 2-Cyan-4-nitroanilin, 4-Phenylazoanilin, 4-Phenylazo-2-methylanilin, 4-(2-Methylphenylazo)anilin, 4-(2-Methylphenylazo)-2-methylanilin, 4-(Benzthiazol-2-yl)anilin oder 4-(6-Methylbenzthiazol-2-yl)anilin.

Wenn sich der Rest der Diazokomponente D von einem Amin $D-NH_2$ der heteroaromatischen Reihe ableitet, stammt dieses vorzugsweise aus der Benzthiazolreihe. Beispielhaft sei 2-Aminobenzthiazol, 2-Amino-6-methylbenzthiazol oder 2-Amino-6-methoxybenzthiazol genannt.

Wichtig ist, daß die Diazokomponente $D-NH_2$ keine Hydroxysulfonylgruppe aufweist.

Der Rest der Kupplungskomponente K stammt z.B. von einer Kupplungskomponente KH aus der Hydroxynaphthalin-, Aminopyridin- oder Pyrazolonreihe und weist für den Fall, daß er durch Hydroxysulfonyl substituiert ist, höchstens eine Hydroxysulfonylgruppe auf. Der Rest K kann sich auch von Acetessigsäure ableiten, z.B. von Acetessigsäuremethyl- oder -ethylester.

Die Kupplungskomponente KH stammt vorzugsweise aus der Hydroxynaphthalinreihe. Die Hydroxynaphthaline können dabei ein- oder mehrfach substituiert sein. Als Substituenten kommen neben Hydroxylsulfonyl, z.B. Carboxyl, $C_1$-$C_4$-Alkoxycarbonyl, Amino oder $C_1$-$C_4$-Monoalkylamino in Betracht.

Beispielhaft seien die Hydroxynaphthaline der Formeln II bis VIII genannt:

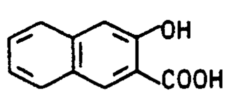
(II) ,

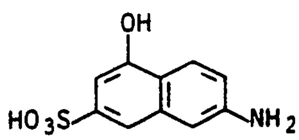
(III) ,

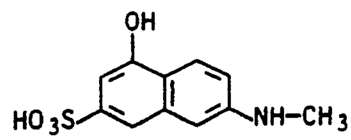
(IV) ,

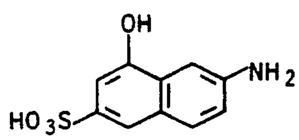
(V) ,

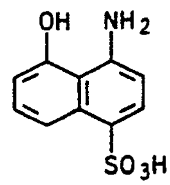
(VI) ,

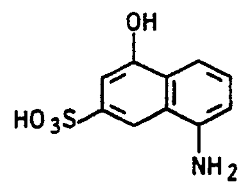
(VII) ,

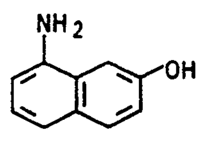
(VIII)

Besonders bevorzugte Kupplungskomponenten aus der Hydroxynaphthalinreihe sind die Hydroxynaphthaline II und III.

Wenn die Kupplungskomponente KH ein Aminopyridin oder ein Pyrazolon darstellt, handelt es sich dabei beispielsweise um ein 2-Aminopyridin- oder ein 1-Phenylpyrazol-5-on-3-carbonsäurederivat.

Solche Derivate gehorchen der Formel IX oder X

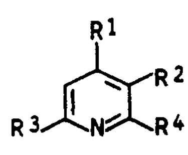
(IX) ,

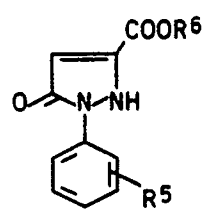
(X) ,

wobei

- $R^1$ $C_1$-$C_4$-Alkyl,
- $R^2$ Wasserstoff, Cyano oder Carbamoyl,
- $R^3$ Wasserstoff, Hydroxy, $C_1$-$C_6$-Alkoxy, das gegebenenfalls durch ein oder zwei Sauerstoffatome unterbrochen ist, gegebenenfalls substituiertes Phenoxy, Amino, $C_1$-$C_6$-Mono- oder Dialkylamino, wobei die Alkylkette jeweils gegebenenfalls durch ein oder zwei Sauerstoffatome unterbrochen ist, oder gegebenenfalls substituiertes Phenylamino,
- $R^4$ Chlor oder den Rest $R^3$, wobei $R^3$ die obengenannte Bedeutung besitzt,
- $R^5$ Wasserstoff, $C_1$-$C_4$-Alkyl, $C_1$-$C_4$-Alkoxy oder Halogen, insbesondere Chlor oder Brom, und
- $R^6$ Wasserstoff oder $C_1$-$C_4$-Alkyl bedeuten.

Bevorzugt sind in diesem Fall solche Farbstoffe der Formel I, deren Rest K sich von der Kupplungskomponente der Formel IX ableitet.

Im Rest $R^3$ auftretende Alkylgruppen sind beispielsweise Methyl, Ethyl, Propyl, Isopropyl, Butyl, Isobutyl, sec-Butyl, Pentyl, Isopentyl, Neopentyl, tert-Pentyl, Hexyl, Isohexyl, 2-Methoxyethyl, 2-Ethoxyethyl, 3,6-Dioxaheptyl oder 3,6-Dioxaoctyl.

Wenn im Rest $R^3$ substituierte Phenylgruppen auftreten, kommen z.B. $C_1$-$C_4$-Alkyl, $C_1$-$C_4$-Alkoxy oder Halogen als Substituenten in Betracht.

In den erfindungsgemäßen Farbstoffen der Formel I ist X, für den Fall, daß y 1 bedeutet, ein Brückenglied oder eine kovalente Bindung oder für den Fall, daß y 2 bedeutet, ein Brückenglied, wobei die Verknüpfung zum Polyethyleniminrest P in allen Fällen über ein Stickstoffatom erfolgt.

Wenn die Kupplungskomponente KH eine Carboxylgruppe oder ein Derivat davon aufweist, wie dies beispielsweise bei den Komponenten der Formel II, Formel X oder bei den Acetessigsäurederivaten der Fall ist, dann stellt X eine kovalente Bindung dar. In diesem Fall erfolgt die Verknüpfung zum Polyethyleniminrest direkt über die (derivatisierte) Carboxylgruppe (durch Reaktion mit dem Polyethylenimin), wie dies durch das folgende Formelfragment veranschaulicht wird.

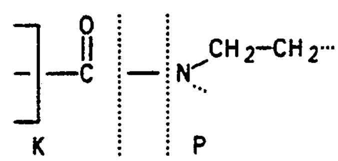

Für den Fall, daß sich die Kupplungskomponente KH von einem Aminopyridinderivat der Formel IX, in der $R^4$ Chlor bedeutet, ableitet, stellt X ebenfalls eine kovalente Bindung dar. In diesem Fall erfolgt die Verknüpfung direkt über den Pyridinring, wobei Chlor gegen den Polyethyleniminrest ausgetauscht ist, was durch das folgende Formelfragment veranschaulicht wird.

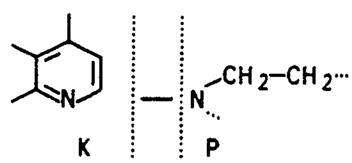

Wenn X ein Brückenglied bedeutet, kommen beispielsweise folgende Reste in Betracht:

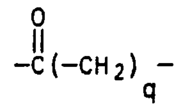 , 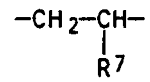 , 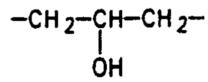 , 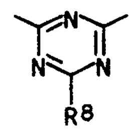 ,

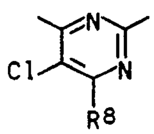 , 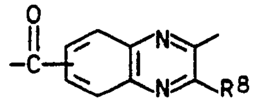 , 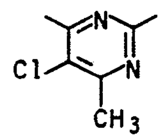 , 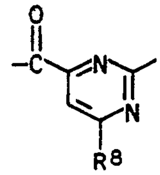

oder 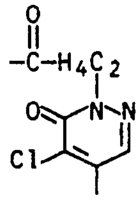 ,

wobei

- q  0 bis 4, vorzugsweise 1 oder 2,
- $R^7$  Wasserstoff oder Methyl und
- $R^8$  für den Fall, daß y für 1 steht, Amino, $C_1$-$C_4$-Mono- oder Dialkylamino, $C_1$-$C_4$-Alkoxy, Phenylamino, das gegebenenfalls durch $C_1$-$C_4$-Alkyl, $C_1$-$C_4$-Alkoxy oder Halogen, insbesondere Chlor oder Brom, substituiert ist, oder Phenyl, oder für den Fall, daß y für 2 steht, den Rest D-N=N-K-, in dem D und K jeweils die obengenante Bedeutung besitzen, bedeuten.

Die Brückenglieder verknüpfen in diesem Fall den Polyethyleniminrest mit der an der Kupplungskomponente befindlichen Amino- oder $C_1$-$C_4$-Alkylaminogruppe. Wichtig dabei ist, daß bei potentiellen trifunktionellen Brückengliedern jeweils nur ein Rest P eines Polyethylenimins an das Brückenglied geknüpft ist, wie dies auch durch die obengenannte formelmäßige Schreibweise zum Ausdruck kommt.

In der obengenannten Formel I stellt P den Rest eines Polyethylenimins dar, dessen Polymerisationsgrad n 5 bis 25 000, vorzugsweise 10 bis 20 000 und insbesondere 35 bis 1000, beträgt. Solche Polyethylenimine, die im allgemeinen verzweigt sind und primäre, sekundäre und tertiäre Aminogruppen aufweisen, sind an sich bekannt. Sie sind erhältlich durch Polymerisation von Ethylenimin in wäßriger Lösung in Gegenwart von sauren Katalysatoren.

Dabei fallen sie im allgemeinen als ca. 50 gew.%ige wäßrige Lösung an, die eine Viskosität von 200 bis 40 000 mPas (bei 20° C) aufweist. Solche Lösungen können direkt für die Synthese der erfindungsgemäßen Farbstoffe verwendet werden.

Die Anzahl m der Chromophorreste, die über eine kovalente Bindung oder über ein Brückenglied an den Polyethyleniminrest gebunden sind, ist abhängig vom Polymerisationsgrad n und durch das Verhältnis von m:n definiert. Erfindungsgemäß beträgt das Verhältnis m:n = 1:1 bis 1:35, vorzugsweise 1:3 bis 1:20. In anderen Worten ausgedrückt, besagt dieses Verhältnis, daß, statistisch gesehen, jeweils ein Chromophorrest auf 1 bis 35, vorzugsweise 3 bis 20 Monomereinheiten des Polyethylenimins kommt. Als Chromophorrest ist dabei jeweils der Rest $(D\text{-}N=N\text{-}K\text{-})_yX$- zu verstehen, in dem D, K, X und y jeweils die obengenannte Bedeutung besitzen. Wenn der Rest K durch Hydroxysulfonyl substituiert ist, beträgt das Verhältnis m:n 1:2 bis 1:35, vorzugsweise 1:3 bis 1:20.

Die erfindungsgemäßen Farbstoffe der Formel I werden zweckmäßig so erhalten, daß man zunächst diejenigen Kupplungskomponenten KH, die eine Amino- oder $C_1$-$C_4$-Alkylaminogruppe aufweisen, nach an sich bekannten Methoden mit einer Vorläuferverbindung des Brückenglieds umsetzt. Solche Vorläuferverbindungen sind beispielsweise Komponenten der Formel

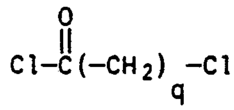, 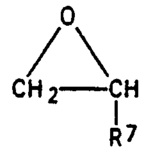, 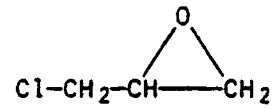,

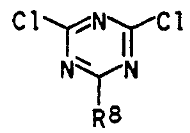, 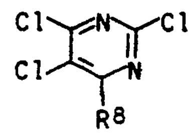, 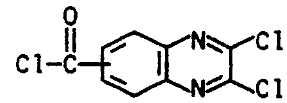,

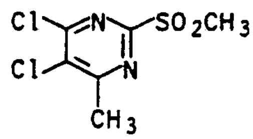, 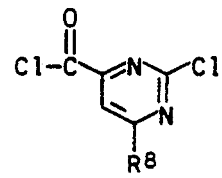 oder 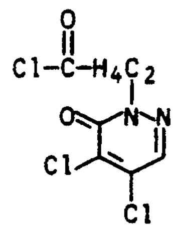

wobei q, $R^7$ und $R^8$ jeweils die obengenannte Bedeutung besitzen, oder auch, soweit möglich, die entsprechenden Bromverbindungen. Sie werden nach an sich bekannten Methoden hergestellt.

Die resultierenden Verbindungen werden dann, ebenso wie diejenigen Kupplungskomponenten KH, die über eine Carboxylgruppe verfügen, oder das Aminopyridinderivat der Formel IX (mit $R^4$ = Chlor) direkt mit dem Polyethylenimin umgesetzt.

Die Umsetzung erfolgt zweckmäßig in wäßriger Lösung oder in einem Lösungsmittel, z.B. in einem Alkanol, wie Methanol, Ethanol, Propanol, Butanol oder Isobutanol, oder in N,N-Dimethylformamid, bei einer Temperatur von 20 bis 150°C, vorzugsweise 50 bis 100°C. Das Molverhältnis ist dabei vom Polymerisationsgrad des Polyethylenimins abhängig und richtet sich außerdem nach der Anzahl m der Chromophorreste, die an das Polyethylenimin geknüpft werden sollen. Dabei gelten die obengenannten zahlenmäßigen Verhältnisse.

Man gibt die Reaktanden zusammen und rührt 5 Minuten bis 15 Stunden bei der obengenannten Temperatur nach. Nach beendeter Umsetzung bleibt die mit Polyethylenimin verknüpfte Kupplungskomponente im allgemeinen in Lösung und kann dann nach an sich bekannten Methoden mit dem aus der Diazokomponente auf üblichem Wege erhältlichen Diazoniumsalz gekuppelt werden.

In manchen Fällen kann die mit Polyethylenimin verknüpfte Kupplungskomponente nach beendeter Reaktion aus der Reaktionslösung ausfallen. In diesem Fall empfiehlt es sich, sie durch Zugabe von Säure, z.B. verdünnte Essigsäure, oder Lauge, z.B. verdünnte Natronlauge, wieder in Lösung zu bringen und dann nach an sich bekannter Methode mit dem Diazoniumsalz der Diazokomponente zu kuppeln.

Es ist aber auch möglich, in der ersten Stufe den Mono- oder Disazofarbstoff auf bekanntem Weg herzustellen und daran anschließend z.B. nach der oben beschriebenen Methode mit dem Polyethylenimin zu verknüpfen.

Die neuen Farbstoffe zeigen eine erstaunlich gute Löslichkeit, insbesondere in saurem Milieu.

Die erfindungsgemäßen Farbstoffe der Formel I eignen sich vorteilhaft zum Färben und Bedrucken von Fasermaterialien, beispielsweise Papier, Leinen, Baumwolle, Leder, Wolle, Polyamidgewebe, Polyacrylnitril, sauer modifiziertes Polypropylen, Polyester oder Mischungen aus den genannten Materialien. Sie ergeben Ausfärbungen mit guten Echtheiten.

Bevorzugt ist die Verwendung der neuen Farbstoffe zum Färben und Bedrucken von Cellulose enthaltenden Materialien.

Insbesondere eignen sie sich für die Herstellung von Tinten, die im Ink-Jet-Verfahren zur Anwendung kommen. Die neuen Farbstoffe besitzen auch hier gute anwendungstechnische Eigenschaften.

Die folgenden Beispiele sollen die Erfindung näher erläutern. Die dort genannten Prozente beziehen sich, sofern nicht anders vermerkt, auf das Gewicht. Die $\lambda_{max}$-Werte wurden in 30 %iger Essigsäure gemessen.

Beispiel 1

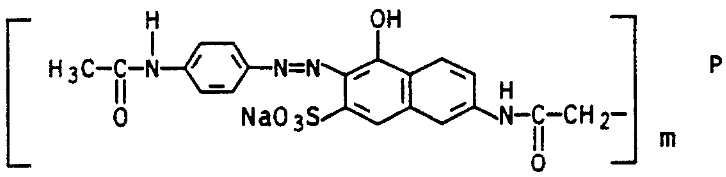

5,16 g einer 50 %igen wäßrigen Lösung von Polyethylenimin mit einem mittleren Molekulargewicht von 1500 (Polymerisationsgrad n = 35) wurden mit 3,71 g des Natriumsalzes der 6-Chloracetylamino-1-hydroxynaphthalin-3-sulfonsäure in Gegenwart von 35 ml Wasser 15 Minuten auf 60 °C erwärmt. Die ausgefallene zähe Masse wurde mit 10 ml 30 %iger Essigsäure wieder in Lösung gebracht und auf 0 bis 5 °C abgekühlt. Zu dem Reaktionsgemisch wurde eine salzsaure Lösung des Diazoniumsalzes, das aus 1,74 g 86,2 %igem 4-Aminoacetanilid frisch hergestellt wurde, bei einem pH-Wert von 4,4 bis 4,7 hinzugetropft.

Die Einsatzstoffe für diesen Ansatz wurden so gewählt, daß das Verhältnis m:n 1:6 beträgt.

Nach Rühren über Nacht wurde mit 10 %iger Natronlauge ein pH-Wert von 8 eingestellt. Der ausgefallene rote Farbstoff wurde filtriert und bei 70 °C unter vermindertem Druck getrocknet. Es verblieben 5 g eines in 30 %iger Essigsäure leicht löslichen Farbstoffs ($\lambda_{max}$: 507 nm), der Cellulosefaser rot färbt und eine gute Ausblutechtheit besitzt.

Analog Beispiel 1 wurden die Beispiele 2 bis 5 durchgeführt, jedoch mit dem Unterschied, daß das Verhältnis m:n jeweils variiert wurde. Je größer dieses Verhältnis ist, desto brillanter werden die Färbungen.

| Beispiel Nr. | Verhältnis m:n | Menge an Polyethylenimin (50 %ig) | Ausbeute | $\lambda_{max}$ [nm] |
|---|---|---|---|---|
| 2 | 1: 3 | 2,58 g | 4,6 g | |
| 3 | 1: 7 | 6,02 g | 5,2 g | 507 |
| 4 | 1: 8 | 6,88 g | 2,25 g | 508 |
| 5 | 1: 9 | 7,74 g | 3,68 g | 507 |
| 6 | 1:10 | 8,6 g | Der Farbstoff blieb in Lösung | |

Beispiel 7

17,2 g einer 50 %igen wäßrigen Lösung von Polyethylenimin mit einem mittleren Molekulargewicht von 4300 (Polymerisationsgrad n = 100) wurden mit 12,6 g des Natriumsalzes der 6-Chloracetylamino-1-hydroxynaphthalin3-sulfonsäure in Gegenwart von 86 ml Wasser und 19,2 g 10 %iger Natronlauge 15 Minuten unter Rückfluß erwärmt. Durch zusätzliche Zugabe von 10 %iger Natronlauge wurde ein pH-Wert von 8,8 eingestellt und dann auf 5 bis 10 °C abgekühlt. Zu dem Reaktionsgemisch wurde eine salzsaure Lösung des Diazoniumsalzes, das aus 6,26 g 4-Aminoacetanilid (86,2 %) frisch hergestellt wurde, hinzugetropft. Nachdem 2 Stunden bei 5 bis 10 °C gerührt wurde, betrug der pH-Wert 6,6. Das ausgefallene rote Produkt wurde abgesaugt und bei 50 °C unter vermindertem Druck getrocknet ($\lambda_{max}$: 503 nm).

Die Einsatzstoffe für dieses Beispiel wurden so gewählt, daß das Verhältnis m:n 1:5,56 betrug.

In den Beispielen 8 bis 10 wurden Polyethylenimine mit verschiedenem Molekulargewicht bei gleichen Verhältnissen, wie in Beispiel 7 beschrieben, umgesetzt.

| Beispiel Nr. | mittleres Molekulargewicht des Polyethylenimins | Pomerisations-grad n |
|---|---|---|
| 8 | 2150 | 50 |
| 9 | 1500 | 35 |
| 10 | 430 | 10 |

Beispiel 11

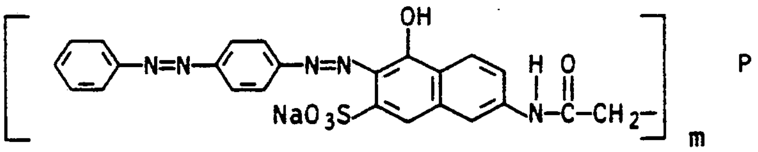

8,6 g einer 50 %igen wäßrigen Lösung von Polyethylenimin mit einem mittleren Molekulargewicht von 4300 (Polymerisationsgrad n = 100) wurde mit 6,7 g des Natriumsalzes der 6-Chloracetylamino-1-hydroxynaphthalin-3-sulfonsäure in Gegenwart von 78 ml Wasser und 9,6 g 10 %iger Natronlauge 15 Minuten unter Rückfluß erwärmt. Das ausgefallene Produkt wurde mit 10 %iger Natronlauge gelöst, und es wurde eine salzsaure Lösung des Diazoniumsalzes, das aus 3,54 g 4-Aminoazobenzol frisch hergestellt wurde, bei 10 °C hinzugetropft. Nachdem 1,5 Stunden gerührt wurde, betrug der pH-Wert der Lösung 5,7. Mit 10 %iger Natronlauge wurde ein pH-Wert von 7,8 eingestellt, wobei der polymere, rote Farbstoff vollständig ausfiel. Das Verhältnis m:n beträgt 1:5.

Eine essigsaure Lösung dieses Farbstoffs färbt Papierfasern in trüben, farbstarken roten Tönen.

In den Beispielen 12 bis 14 wurden Polyethylenimine mit verschiedenem Molekulargewicht bei gleichen Mengenverhältnissen, wie in Beispiel 11 beschrieben, umgesetzt.

| Beispiel Nr. | Mittleres Molekulargewicht des Polyethylenimin | Polymerisationsgrad n |
|---|---|---|
| 12 | 2150 | 50 |
| 13 | 1500 | 35 |
| 14 | 430 | 10 |

Beispiel 15

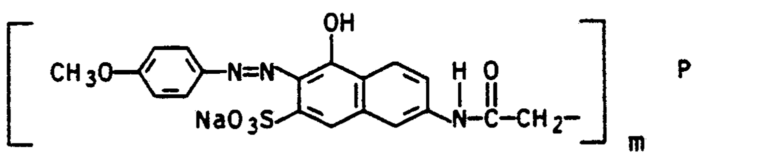

8,6 g einer 50 %igen wäßrigen Lösung von Polyethylenimin mit einem mittleren Molekulargewicht von 1500 (Polymerisationsgrad n = 35) wurden mit 6,73 g des Natriumsalzes der 6-Chloracetylamino-1-hydroxynaphthalin-3-sulfonsäure in Gegenwart von 79 ml Wasser und 9,6 g 10 %iger Natronlauge 15 Minuten unter Rückfluß erwärmt. Mit 30 %iger Essigsäure wurde ein pH-Wert von 8 eingestellt und die wäßrige Phase (obere Phase) abdekantiert. Der Rückstand wurde mit 150 g 30 %iger Essigsäure und 200 g Tributylamin gelöst.

Es wurde das Diazoniumsalz von 4-Methoxyanilin, das aus 1,97 g 4-Methoxyanilin frisch hergestellt wurde, bei 5 bis 10 °C hinzugetropft. Nach zweistündigem Nachrühren wurde mit 10 %iger Natronlauge ein pH-Wert von 7 eingestellt und der ausgefallene rote polymere Farbstoff über eine Glasfritte abgesaugt. Eine essigsaure Lösung dieses Farbstoffs färbt Papierfasern rot mit guter Ausblutechtheit. Die Einsatzstoffe der Reaktion wurden so gewählt, daß das Verhältnis m:n 1:6 betrug ($\lambda_{max}$: 508 nm).

Der Farbstoff des Beispiels 16 wurde analog hergestellt.

| Beispiel Nr. | Amin | Polyethylenimin mittl. Molekulargewicht | Polymerisationsgrad n | Farbton auf Papier | $\lambda_{max}$ [nm] |
|---|---|---|---|---|---|
| 16 | 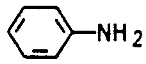 | 4300 | 100 | orange | 487 |

Beispiel 17

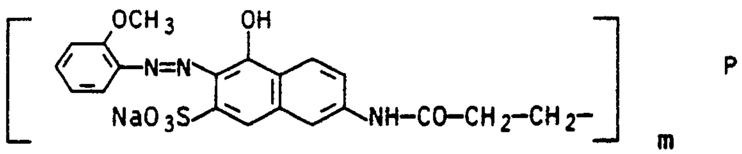

8,6 g einer 50 %igen wäßrigen Lösung von Polyethylenimin mit einem mittleren Molekulargewicht von 1500 (Polymerisationsgrad n = 35) wurden mit 7,03 g des Natriumsalzes der 6-Chlorpropionylamino-1-hydroxynaphthalin-6-sulfonsäure in 73 ml Wasser und 9,6 g 10 %iger Natronlauge 5 Minuten unter Rückfluß erwärmt. Mit 10 %iger Essigsäure wurde ein pH-Wert von 3,4 eingestellt und die wäßrige Phase (obere Phase) abdekantiert. Der Rückstand wurde in 150 g 30 %iger Essigsäure und 66 g Tributylamin gelöst. Zu diesem Reaktionsgemisch wurde das Diazoniumsalz von 2-Methoxyanilin, das aus 1,97 g 2-Methoxyanilin frisch hergestellt wurde, bei 10 bis 15 °C hinzugetropft. Nach Rühren über Nacht betrug der pH-Wert 4,4. Mit 10 %iger Natronlauge wurde ein pH-Wert von 7 eingestellt und der ausgefallene rote Farbstoff abgesaugt. Nach den Einsatzstoffen beträgt das Verhältnis m:n 1:6. Der in 30 %iger Essigsäure lösliche Farbstoff färbt Papierfasern rot ($\lambda_{max}$: 507 nm).

Die Farbstoffe der Beispiele 18 bis 27 wurden analog Beispiel 17 hergestellt:

| Beispiel Nr. | Diazokomponente D-$NH_2$ | Farbton auf Papier | $\lambda_{max}$ [nm] |
|---|---|---|---|
| 18 | 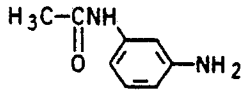 | orange | 495 |
| 19 | 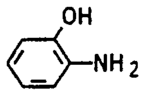 | rot | 500 |
| 20 | 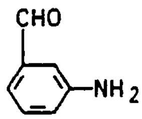 | orange | 482 |
| 21 | 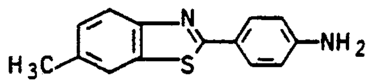 | rot | 497 |
| 22 | 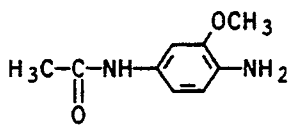 | rot | 514 |
| 23 | 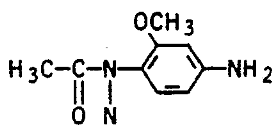 | rot | 509 |
| 24 | 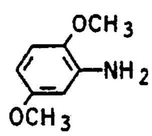 | blaust. rot | 519 |
| 25 | 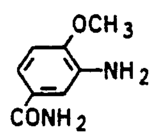 | scharlach | 498 |
| 26 | 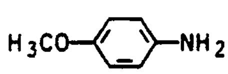 | rot | 504 |
| 27 | 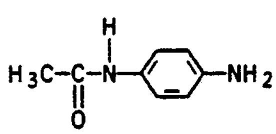 | rot | 507 |

Beispiel 28

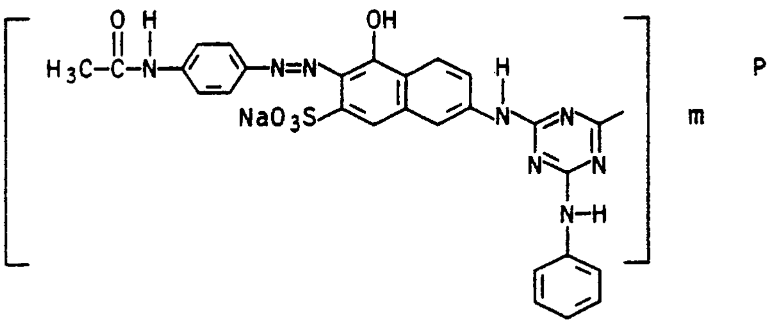

2 g Cyanurchlorid wurden in 21 ml Eiswasser und 0,02 g 10 %iger Salzsäure suspendiert und auf 75 g Eiswasser gegeben. Bei 0°C wurde zu der Suspension eine Lösung aus 2,67 g 6-Amino-1-hydroxynaphthalin-3-sulfonsäure (93 %ig), 0,92 g 50 %ige Natronlauge und 30 ml Wasser zulaufen gelassen. Ein pH-Wert von 5,5 bis 6 wurde mittels 10 %iger wäßriger Sodalösung während 45 Minuten aufrechterhalten. Das Reaktionsgemisch wurde filtriert und mit 0,95 g Anilin versetzt. Es wurde 3,5 Stunden auf 40°C erwärmt und der pH-Wert mit 10 %iger Sodalösung auf 4 bis 4,5 gehalten. Nach Rühren über Nacht wurden zu dieser Lösung 8,6 g 50 %iges Polyethylenimin (Polymerisationsgrad n = 35) und 5,28 g 10 %ige Natronlauge hinzugegeben und 12 Minuten unter Rückfluß erwärmt. Mit 30 %iger Essigsäure wurde ein pH-Wert von 7 eingestellt und auf 0°C abgekühlt. Zu der Lösung wurde bei 0°C das Diazoniumsalz von 4-Aminoacetanilid, das aus 1,74 g 4-Aminoacetanilid (86,2 %) frisch hergestellt wurde, während 10 Minuten zugetropft und über Nacht gerührt. Die rote Reaktionslösung wurde mit Eisessig auf einen pH-Wert von 7 eingestellt. Sie färbt Cellulosefasern in 0,4 %iger Ausfärbung rot, wobei der Farbstoff vollständig aufzieht. Nach den Einsatzstoffen beträgt das Verhältnis m:n 1:10 ($\lambda_{max}$: 514 nm).

Die Farbstoffe der Beispiele 29 bis 35 wurden in analoger Weise hergestellt.

| Beispiel Nr. | Diazokomponente $DNH_2$ | Verhältnis m:n | Farbton auf Papier | $\lambda_{max}$ [nm] |
|---|---|---|---|---|
| 29 | 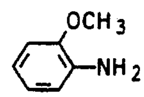 | 1:5 | rot | 514 |
| 30 | 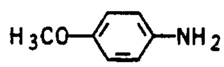 | 1:5 | rot | 514 |
| 31 | 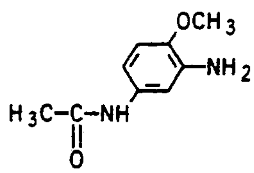 | 1:10 | rot | 520 |
| 32 | 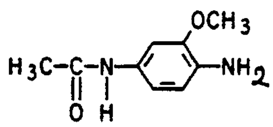 | 1:10 | rot | 519 |
| 33 | 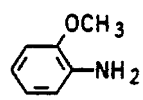 | 1:10 | rot | 525 |
| 34 | 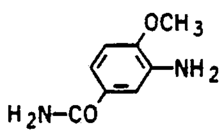 | 1:10 | rot | 506 |
| 35 | 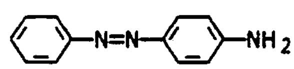 | 1:10 | rot | 518 |

Beispiel 36

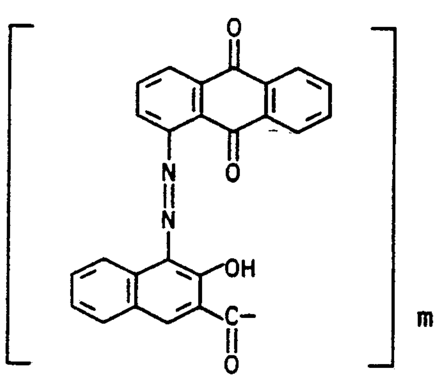

P

43 g 50 %iges wäßriges Polyethylenimin (Polymerisationsgrad n = 100) wurden mit 20,5 g 2-Hydroxynaphthalin-3-carbonsäuremethylester und 50 ml N,N-Dimethylformamid 30 Minuten bei 120 °C

gerührt, wobei das bei der Reaktion entstehende Methanol abdestilliert wurde. Nach dem Abkühlen wurde mit Essigsäure ein pH-Wert von 7 eingestellt und auf 10 °C abgekühlt. Das Diazoniumsulfat von 1-Aminoanthrachinon, das aus 22,8 g 1-Aminoanthrachinon frisch hergestellt wurde, wurde gleichzeitig mit 340 g einer 10 %igen Natriumacetatlösung hinzugetropft. Es wurde eine Stunde nachgerührt und der ausgefallene polymere Farbstoff abgesaugt. Der feste Farbstoff wurde intensiv mit 5 %iger Natronlauge verrührt und über eine Glasfritte abgesaugt. Der Rückstand wurde mit 30 %iger Essigsäure in Lösung gebracht und über ein Tuchfilter klärfiltriert. Der Farbstoff zieht auf Cellulosefasern vollständig auf und besitzt gute Ausblutechtheit gegen Wasser. Das Verhältnis m:n beträgt 1:5 ($\lambda_{max}$: 508 nm).

Die folgenden Beispiele 37 bis 40 wurden in analoger Weise hergestellt. Das Verhältnis m:n beträgt hierbei jeweils 1:10.

| Beispiel Nr. | Diazokomponente $DNH_2$ | Polymerisationsgrad n | Farbe | $\lambda_{max}$ [nm] |
|---|---|---|---|---|
| 37 | 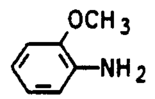 | 14 000 | blaurot | 515 |
| 38 | 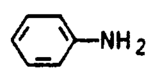 | 14 000 | scharlach | 498 |
| 39 | 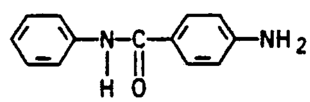 | 14 000 | rot | 498 |
| 40 | 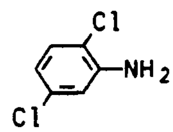 | 14 000 | orange | 492 |

Beispiel 41

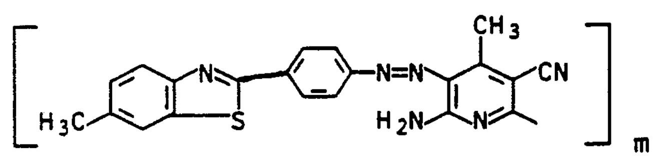

P

43 g 50 %iges wäßriges Polyethylenimin mit einem mittleren Molekulargewicht von 600 000 (Polymerisationsgrad n = 14 000) wurde mit 250 ml Isobutanol und 11,2 g 6-Amino-2-chlor-3-cyano-4-methylpyridin (75,1 %) versetzt und auf 108 °C erwärmt. Dabei wurde das Wasser der eingesetzten Polyethyleniminlösung abdestilliert.

Nach 11,5 Stunden wurden 250 ml Wasser zugegeben, abgekühlt und mit 21 ml 30 %iger Salzsäure ein pH-Wert von 5,4 eingestellt. Das Diazoniumchlorid von 4-(6-Methylbenzthiazol-2-yl)anilin, das aus 12,64 g 4-(6-Methylbenzthiazol-2-yl)anilin (95 %ig) frisch hergestellt wurde, wurde bei 5 bis 10 °C zugetropft, und es wurde 2 Stunden nachgerührt. Mit 10 %iger Natronlauge wurde ein pH-Wert von 12,5 eingestellt und der gebildete Niederschlag über eine Glasfritte abgesaugt. Der gelbe getrocknete Farbstoff löst sich in 30 %iger Essigsäure und färbt Papier mit guten Ausblutechtheiten ($\lambda_{max}$: 429 nm).

Die Einsatzstoffe wurden so gewählt, daß das Verhältnis m:n 1:10 beträgt.

Beispiel 42

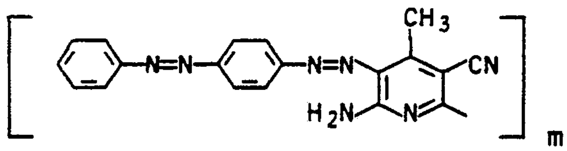

P

Der orange Farbstoff dieses Beispiels wurde analog Beispiel 41 hergestellt. Anstelle des Diazoniumchlorids aus 12,64 Teilen 4-(6-Methylbenzthiazol-2-yl)anilin (95 %ig), wurde hier jedoch das Diazoniumchlorid von 4-Aminoazobenzol, das aus 8,35 g 4-Aminoazobenzol frisch hergestellt wurde, verwendet. ($\lambda_{max}$: 432 nm)

Beispiel 43

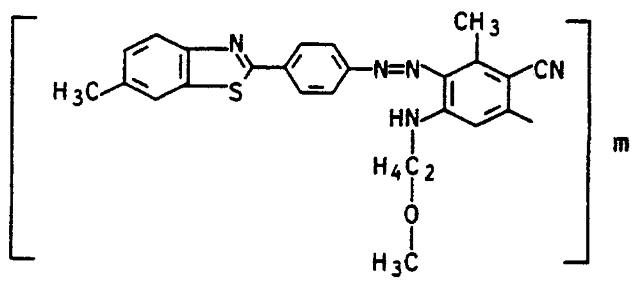

P

43 g einer 50 %igen wäßrigen Lösung von Polyethylenimin mit einem mittleren Molekulargewicht von 600 000 (Polymerisationsgrad n = 14 000) wurden mit 250 ml Isobutanol und 17,28 g 2-Chlor-3-cyano-4-methyl-6-(2-methoxyethylamino)pyridin 3 Stunden auf 145 °C erhitzt, dabei destillierte ein Gemisch aus Isobutanol und Wasser langsam ab. Das Umsetzungsprodukt wurde mit 250 ml heißem Wasser in Lösung gebracht und, wie in Beispiel 41 beschrieben, mit dem Diazoniumsalz, das aus 12,39 g 4-(6-Methylbenzthiazol-2-yl)anilin frisch hergestellt wurde, bei 0 bis 10 °C umgesetzt. Es wurde eine Lösung erhalten, aus der Cellulosefasern gelb gefärbt werden. Das Verhältnis m:n beträgt 1:10 ($\lambda_{max}$: 434 nm).

Die Farbstoffe der Beispiele 44 bis 47 wurden in analoger Weise hergestellt:

| Beispiel Nr. | Diazokomponente $DNH_2$ | Farbton |
|---|---|---|
| 44 | 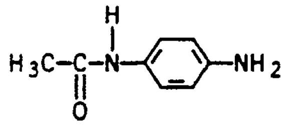 | gelb |
| 45 | 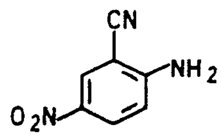 | rot |
| 46 | 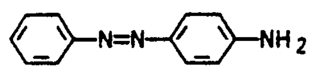 | orange |
| 47 | 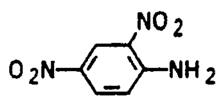 | rot |

Beispiel 48

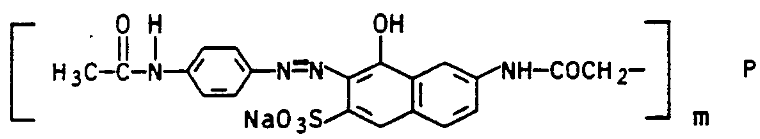

43 g einer 50 %igen wäßrigen Lösung eines Polyethylenimins mit einem mittleren Molekulargewicht von 600 000 (Polymerisationsgrad n = 14 000) wurden mit 172 ml Wasser und 16,21 g 7-Chloracetylamino-1-hydroxynaphthalin-3-sulfonsäure 2 Stunden unter Rückfluß erhitzt. Das Umsetzungsprodukt wurde bei 0 bis 3 °C mit dem Diazoniumchlorid, das aus 8,8 g 4-Aminoacetanilid (85 %ig) frisch hergestellt wurde, umgesetzt. Als kein Diazoniumsalz mehr nachweisbar war, wurden 243 g Eisessig hinzugefügt. Aus der Lösung wurden Cellulosefasern rot gefärbt. Die Mengen der Einsatzstoffe wurde so gewählt, daß sich ein Verhältnis m:n von 1:10 ergibt.

Beispiel 49

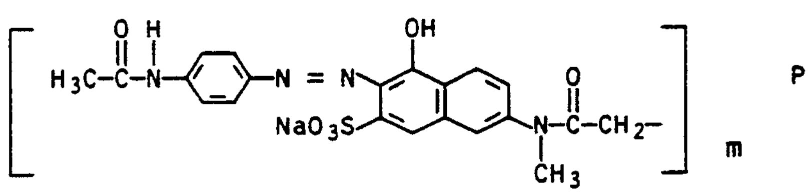

60,2 g 50 %iges wäßriges Polyethylenimin mit einem mittleren Molekulargewicht von 1500 (Polymerisationsgrad n = 35) wurden mit 56,4 g des Natriumsalzes von 6-(N-Methyl-N-chloracetylamino)-1-hydroxynaphthalin-3-sulfonsäure in Gegenwart von 330 ml Wasser 15 Minuten auf 60 °C erwärmt. Nach Zugabe von 40 ml Eisessig wurde eine Lösung mit einem pH-Wert von 4,7 erhalten. Zu dem Reaktionsgemisch wurde eine salzsaure Lösung des Diazoniumsalzes, das aus 17,4 g 4-Aminoacetanilid (86,2 %) frisch

hergestellt wurde, hinzugetropft. Nach zweistündigem Rühren bei 0 bis 5 °C wurde mit 10 %iger Natronlauge ein pH-Wert von 8 eingestellt und das ausgefallene Produkt über eine Glasfritte (G3) abgesaugt. Nach dem Trocknen wurden 53,13 g eines roten Farbstoffs erhalten, dessen essigsaure Lösung Papierfasern mit guten Ausblutechtheiten färbt. Das Verhältnis m:n beträgt 1:7 ($\lambda_{max}$: 507 nm).

Die Farbstoffe der Beispiele 50 und 51 wurden analog hergestellt:

| Beispiel Nr. | KH | Polymerisationsgrad n | Farbston auf Papier | $\lambda_{max}$ [nm] |
|---|---|---|---|---|
| 50 | 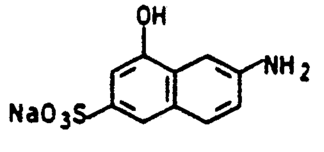 | 35 | rot | 514 |
| 51 | 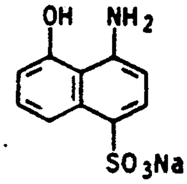 | 35 | violett | 537 |

Beispiel 52

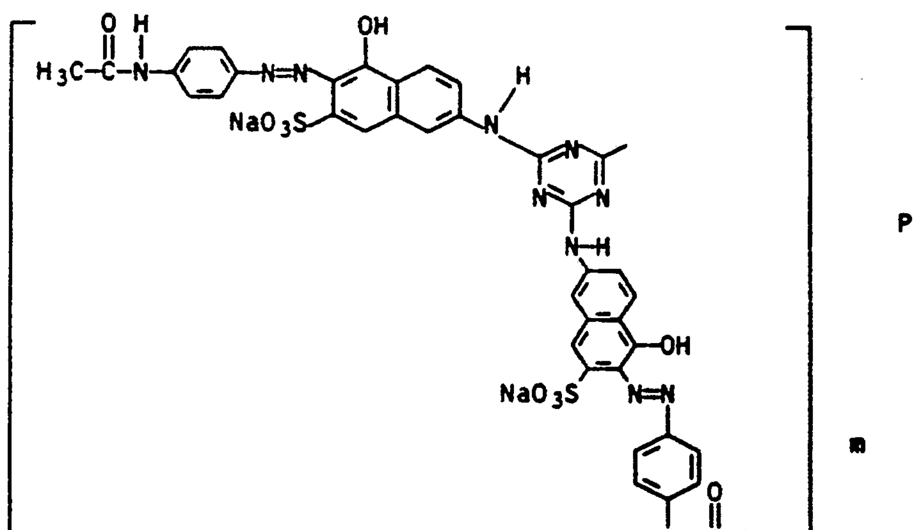

94 g 4,6-Bis(1-hydroxy-3-hydroxysulfonylnaphth-6-ylamino)-2-chlortriazin wurden mit 2,4 g einer 10 %igen Natronlauge und 6,45 g einer 50 %igen wäßrigen Lösung eines Polyethylenimins (Polymerisationsgrad n = 100) 5 Minuten unter Rückfluß erhitzt und anschließend mit 30 %iger Essigsäure bis zu einem pH-Wert von 4,3 versetzt.

Bei 5 °C wurde eine salzsaure wäßrige Lösung eines Diazoniumsalzes, welches aus 1,74 g 4-Aminoacetanilid frisch hergestellt wurde, während 20 Minuten hinzugetropft und 3,5 Stunden bei der angegebenen Temperatur gerührt. Aus der Lösung lassen sich Cellulosefasern in roten Tönen mit guter Ausblutechtheit gegen Kondenswasser färben. Das Verhältnis m:n beträgt 1:15 ($\lambda_{max}$: 513 nm).

Die Farbstoffe der Beispiele 53 bis 55 wurden in analoger Weise hergestellt. Das Verhältnis m:n beträgt jeweils 1:20.

| Beispiel Nr. | D-NH2 | Farbton | $\lambda_{max}$ [nm] |
|---|---|---|---|
| 53 | 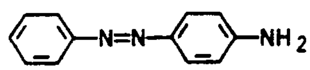 | trüb rot | 520 |
| 54 | 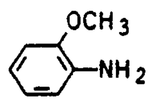 | rot | 515 |
| 55 | 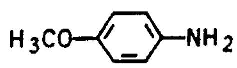 | rot | 514 |

Beispiel 56

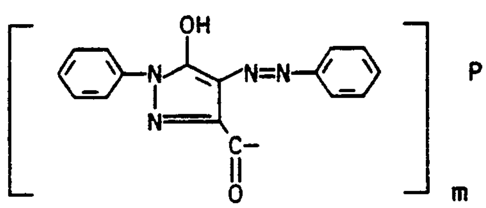

43 g 50 %iges wäßriges Polyethylenimin (Polymerisationsgrad n = 35) wurden in 50 ml Ethylenglykol mit 30,8 g 1-Phenylpyrazol-5-on-3-carbonsäureethylester (77,3 %ig) auf 150 °C erhitzt. Wasser und das bei der Reaktion entstehende Ethanol wurden abdestilliert. Danach wurde das Reaktionsgemisch mit 230 ml Eiswasser und 70 ml Eisessig verdünnt und eine salzsaure Lösung des Diazoniumsalzes, das aus 7,44 g Anilin hergestellt wurde, bei 0 °C und einem pH-Wert von 3,5 hinzugefügt. Nach 1 1/2 stündigem Rühren wurde mit 10 %iger Natronlauge ein pH-Wert von 12 eingestellt und der gelbe, polymere Farbstoff ausgefällt. Es wurden 55 g Farbstoff isoliert ($\lambda_{max}$: 425 nm).

Die Farbstoffe der Beispiele 57 bis 61 wurden in analoger Weise hergestellt:

| Beispiel Nr. | $D-NH_2$ | Farbton | $\lambda_{max}$ [nm] |
|---|---|---|---|
| 57 | 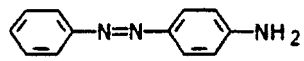 | orange | 453 |
| 58 | 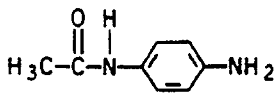 | orange | 451 |
| 59 | 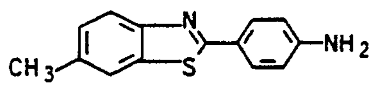 | orange | 449 |
| 60 | 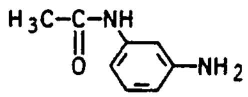 | gelb | 431 |
| 61 | 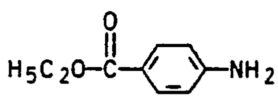 | gelb | 406 |

Beispiel 62

5 g des roten Farbstoffs aus Beispiel 1 und 89,5 g Wasser wurden mit 0,5 g Eisessig auf einen pH-Wert von 5 gebracht. Zu der Lösung wurden noch 5 g Diethylenglykol gegeben. Nach Abfiltrieren durch eine Glasfritte (G4) erhielt man eine Tinte, die für das Ink-Jetverfahren geeignet ist und wischfeste Schriftbilder im pH-Bereich zwischen 4 und 9 ergibt.

In analoger Weise wurden auch die Farbstoffe aus den Beispielen 3, 4, 5, 8, 9, 11, 12, 13, 15, 16, 18, 36, 44, 46 und 49 zu Tinten für das Ink-Jetverfahren verarbeitet.

## Patentansprüche

**1.** Polyethylenimin enthaltende Azofarbstoffe der Formel I

$[(D\text{-}N=N\text{-}K\text{-})_yX\text{-}]_mP$ (I),

in der

D den Rest einer Diazokomponente, die sich von einem isocyclischen aromatischen Amin oder von einem heteroaromatischen Amin ableitet und frei ist von Hydroxysulfonylgruppen,

K den Rest einer Kupplungskomponente aus der Hydroxynaphthalin-, Aminopyridin- oder Pyrazolonreihe, der für den Fall, daß er durch Hydroxysulfonyl substituiert ist, höchstens eine Hydroxysulfonylgruppe aufweist, oder den Rest einer Kupplungskomponente, die sich von Acetessigsäure ableitet,

y 1 oder 2,

X für den Fall, daß y für 1 steht, eine kovalente Bindung oder ein Brückenglied oder für den Fall, daß y für 2 steht, ein Brückenglied und

P den Rest eines Polyethylenimins, dessen Polymerisationsgrad n 5 bis 25 000 beträgt,

bedeuten, wobei die Anzahl m der Chromophorreste abhängig ist vom Polymerisationsgrad n und durch das Verhältnis m:n = 1:1 bis 1:35 definiert ist, mit der Maßgabe, daß wenn der Rest K durch Hydroxysulfonyl substituiert ist, das Verhältnis m:n 1:2 bis 1:35 beträgt.

**2.** Polyethylenimin enthaltende Azofarbstoffe gemäß Anspruch 1, dadurch gekennzeichnet, daß D den Rest einer Diazokomponente aus der Anilinreihe bedeutet.

3. Polyethylenimin enthaltende Azofarbstoffe gemäß Anspruch 1, dadurch gekennzeichnet, daß K den Rest einer Kupplungskomponente aus der Hydroxynaphthalinreihe bedeutet.

4. Polyethylenimin enthaltende Azofarbstoffe gemäß Anspruch 1, dadurch gekennzeichnet, daß K den Rest einer Kupplungskomponente aus der 2-Aminopyridinreihe bedeutet.

5. Verwendung der Polyethylenimin enthaltenden Azofarbstoffe gemäß Anspruch 1 zum Färben oder Bedrucken von Fasermaterialien.

6. Verwendung der Polyethylenimin enthaltenden Azofarbstoffe gemäß Anspruch 1 zum Färben oder Bedrucken von Cellulose enthaltenden Fasermaterialien.

7. Verwendung der Polyethylenimin enthaltenden Azofarbstoffe gemäß Anspruch 1 zur Herstellung von Tinten für das Ink-Jet-Verfahren.

## Claims

1. A polyethyleneimine-containing azo dye of the formula I

$$[(D\text{-}N=N\text{-}K\text{-})_yX\text{-}]_mP \qquad (I)$$

where
- D is the radical of a diazo component which is derived from an isocyclic aromatic amine or from a heteroaromatic amine and is free of hydroxysulfonyl groups,
- K is the radical of a coupling component of the hydroxynaphthalene, aminopyridine or pyrazolone series which, if substituted by hydroxysulfonyl, has at most one hydroxysulfonyl group, or is the radical of a coupling component derived from acetoacetic acid,
- y is 1 or 2,
- X is a covalent bond or a bridge member if y is 1 or a bridge member if y is 2, and
- P is the radical of a polyethyleneimine whose degree of polymerization n is from 5 to 25,000,

and the number m of chromophore radicals is dependent upon the degree of polymerization n and is defined by the ratio m:n = from 1:1 to 1:35, with the proviso that when K is substituted by hydroxysulfonyl the ratio m:n is from 1:2 to 1:35.

2. A polyethyleneimine-containing azo dye as claimed in claim 1, wherein D is the radical of a diazo component of the aniline series.

3. A polyethyleneimine-containing azo dye as claimed in claim 1, wherein K is the radical of a coupling component of the hydroxynaphthalene series.

4. A polyethyleneimine-containing azo dye as claimed in claim 1, wherein K is the radical of a coupling component of the 2-aminopyridine series.

5. A method of using the polyethyleneimine-containing azo dye as claimed in claim 1, for dyeing or printing fiber materials.

6. A method of using the polyethyleneimine-containing azo dye as claimed in claim 1, for dyeing or printing cellulose-containing fiber materials.

7. A method of using the polyethyleneimine-containing azo dye as claimed in claim 1, for preparing inks for the ink jet process.

## Revendications

1. Colorant azoïque contenant de la polyéthylenimine de la formule I

$$[(D\text{-}N=N\text{-}K\text{-})_yX\text{-}]_mP$$

dans laquelle

- D représente le reste d'un composant diazo, qui dérive d'une amine aromatique isocyclique ou d'une amine hétéroaromatique et est exempt de groupes hydroxysulfonyle,
- K représente le reste d'un composant de copulation de la série hydroxynaphtaline, aminopyridine ou pyrazolone, qui, dans le cas où il est substitué par hydroxysulfonyle, possède au plus un groupe hydroxysulfonyle ou le reste d'un composant de copulation qui dérive de l'acide acétique
- y représente 1 ou 2
- X représente, dans le cas où y est mis pour 1, une liaison covalente ou un chaînon de pontage ou, dans le cas où y est mis pour 2, un chaînon de pontage, et,
- P représente le reste d'une polyethylenimine, dont le degré de polymérisation est de 5 à 25 000, le nombre m étant défini par le rapport m/n = 1/1 à 1/35 sous la condition que, lorsque le reste K est substitué par hydroxysulfonyle, le rapport m/n est compris entre 1/2 et 1/35.

**2.** Colorant azoïque contenant de la polyethylenimine, selon la revendication 1, caractérisé par le fait que D représente le reste d'un composant diazo de la série de l'aniline.

**3.** Colorant azoïque contenant de la polyethylenimine, selon la revendication 1, caractérisé par le fait que K représente le reste d'un composant de copulation de la série de l'hydroxynaphtaline,

**4.** Colorant azoïque contenant de la polyethylenimine, selon la revendication 1, caractérisé par le fait K représente le reste d'un composant de copulation de la série de la 2-aminopyridine,

**5.** Utilisation du colorant azoïque contenant de la polyethylenimine, selon la revendication 1 pour teindre ou imprimer des matériaux fibreux,

**6.** Utilisation du colorant azoïque contenant de la polyethylenimine, selon la revendication 1 pour teindre ou imprimer des matériaux fibreux contenant de la cellulose,

**7.** Utilisation du colorant azoïque contenant de la polyethylénimine, selon la revendication 1, pour la fabrication d'encre par le procédé au jet d'encre.